# DEMANDE DE BREVET EUROPEEN

(11) **EP 0 640 280 A1**
(43) Date de publication de la demande: **01.03.1995**
(21) Numéro de dépôt: 94111570.1
(22) Date de dépôt: 25.07.1994
(51) Int. Cl.: A01G 13/02, C09K 17/52

(54) **Couverture de sol compacte faite à partir de pailles, d'écorces ou d'un autre dérivé cellulosique destinée à être utilisée en lieu et place des couvertures de sol traditionnelles, sa production et son utilisation**

(30) Priorité: 27.07.1993 BE 9300791
(71) Demandeur: De Wulf, Olivier, B-1040 Bruxelles (BE); De Wulf-Guisset, Anne, F-60190 Arsy (FR); De Wulf, Philippe, B-4250 Geer (BE); De Wulf, Marc, B-1040 Bruxelles (BE)
(72) Inventeur: De Wulf, Olivier, B-1040 Bruxelles (BE); De Wulf-Guisset, Anne, F-60190 Arsy (FR); De Wulf, Philippe, B-4250 Geer (BE); De Wulf, Marc, B-1040 Bruxelles (BE)

(57) **Abrégé**

Le paillage ou couverture de sol est une technique ancestrale qui consiste à recouvrir le sol de paille, plus ou moins brisée, de balles, de feuilles, ... Les écorces d'arbres en l'état sont également utilisées à cette fin. La présente invention consiste en une couverture de sol compacte constituée de différentes matières cellulosiques (pailles, balles de céréales, coques de cacao, papier, ...) et éventuellement de divers additifs (organiques, basifiants, acidifiants, désinfectants, aidant à la compression, oligo-éléments ou colorants), son procédé de fabrication et son utilisation sur sols cultivés ou non cultivés.

## Description

L'invention décrit une couverture de sol compacte à haut pouvoir de gonflement faite à partir de pailles, d'écorces, de sciures de bois ou d'un autre dérivé cellulosique et de divers additifs possibles décrits ci-dessous, ainsi que sa confection et son utilisation.
L'originalité de ce produit réside dans sa compacité associée à une haute capacité de délitage et de gonflement lors de son application sur le sol.
L'originalité du traitement réside dans le compactage réversible de ces éléments, compactage qui permet une application aisée du produit et dont la réversibilité garantit une couverture uniforme du sol.
L'originalité de l'utilisation réside dans l'application à la surface de la terre d'une couverture de sol compacte constituée de paille ou de tout autre élément cellulosique et éventuellement de divers additifs et caractérisée par une expansion importante après son application sur le sol, le but étant de couvrir et protéger totalement la surface du sol.

Le paillage ou couverture de sol est une technique ancestrale qui consiste à recouvrir le sol d'une matière isolante (paille de céréales plus ou moins brisée, balles, feuilles, bruyères, mousses, tannée, vieux fumier de couche, etc.) pour, suivant les saisons, protéger les plantes contre la gelée ou les excès de chaleur ou pour empêcher certains fruits d'être souillés par la terre (melons, fraises), ce qui se produit à la suite des pluies et des arrosages.
Le terme paillis est réservé à l'emploi de la paille brisée, du fumier vieux mais pailleux, des résidus de couches au printemps et, en été tous matériaux qu'on dispose à la surface du sol pour qu'il reste souple et humide.
Cette technique de paillage telle que décrite présente le gros inconvénient de faire appel à des matériaux peu stables, difficilement manipulables et d'une esthétique contestable. De plus, la qualité de ces matériaux étant très variable, le résultat obtenu est lui-même très variable.

Les écorces de résineux sont également utilisées soit en l'état, soit triées, pour couvrir les sols et éviter la croissance de plantes adventices indésirables grâce à leur effet couvrant du sol et à la présence de substances phytotoxiques contenues dans les écorces. La présence de substances phytotoxiques en quantités non négligeables dans les écorces à pour conséquence, dans la majorité des cas, de limiter la croissance de toutes les plantes (par lessivage de ces substances des écorces et leur incorporation dans le sol de surface), voire d'empêcher tout labourage ultérieur de ces écorces avec le reste de la terre, sous peine de freiner la croissance de toutes les plantes dans le sol traité (par incorporation dans le sol des écorces et conséquemment des substances phytotoxiques qu'elles contiennent).
Enfin, les écorces de résineux contiennent très peu d'éléments capables de fertiliser le sol.

La présente invention appliquée sur un sol gonfle en présence d'humidité et recouvre très rapidement le sol d'une couche protectrice. Elle empêche le développement des plantes adventices par privation de lumière, agit comme régulateur hydrique en retenant l'eau et en réduisant l'évaporation, la percolation et le ruissellement, agit comme régulateur thermique en atténuant les effets des grandes chaleurs et des grands froids. De plus, elle agit à la façon d'un engrais organique en distribuant régulièrement au sol les substances fertilisantes qu'elle contient.

La présente invention a pour but de pallier les inconvénients associés aux différentes techniques connues de couverture de sol, phytotoxicité, variabilité des résultats, difficulté d'utilisation, aspect peu uniforme du sol traité.
Puisque cette couverture de sol est composée de substances biodégradables ou minérales, elle peut être laissée à la surface du sol ou enfouie lorsqu'elle a cessé d'être fonctionnelle.
Par sa compacité, elle est d'un stockage, d'un transport et d'une utilisation aisés.
De plus, de par sa fabrication standardisée, elle présente des caractéristiques constantes, tant physiques que chimiques (composition, texture, pouvoir de rétention d'eau et pouvoir couvrant).
Une fois appliquée sur le sol, son pouvoir de gonflement et d'absorption de l'humidité exceptionnels (de 5 à 10 fois son volume de départ) lui confèrent des caractéristiques couvrantes et de rétention de l'eau convenant particulièrement bien à cette utilisation.
Enfin, de par sa nature, elle permet une libération progressive dans les sols des éléments qui la composent, autorisant une amélioration spécifique du sol sur lequel elle est appliquée (acidification d'un sol trop basique, basification d'un sol trop acide, enrichissement en oligoéléments qui pourraient faire défaut au sol sur lequel elle est appliquée, ...).
Cette couverture de sol est constituée de pailles (froment, escourgeon, riz, millet, sorgho, ...), de balles de céréales, de paillettes, d'anas ou d'étoupe de lin, de bagasse de canne à sucre, de coques de cacao, de rafles de maïs, de sciure de bois, de terreau, compost ou tourbe séchés, de foin et déshydraté de luzerne et graminées, d'écorces d'arbres ou de papier ou carton.
Ces matières peuvent être utilisées seules ou en mélange. De plus, d'autres matières peuvent leur être adjointes. Peuvent être additionnées des matières d'origine organique tels que laine ou déchets de laine, cuirs ou déchets de cuir, poils d'animaux, mycélium de champignon, ..., Peuvent être additionnées des matières désinfectantes telles que l'acide propionique, l'acide sorbique, l'acide fumarique (connus pour limiter le développement des moisissures qui peuvent altérer l'aspect décoratif du produit appliqué sur le sol), le sulfate de fer ou le sulfate de cuivre.
Peuvent également être additionnées des matières acidifiantes telles que l'acide phosphorique, l'acide sulfurique ou l'acide acétique.
Peuvent également être additionnées des matières basifiantes telles que l'hydroxyde de sodium, l'hydroxyde de potassium, l'hydroxyde de calcium, le carbonate de calcium.
Peuvent également être additionnées des matières facilitant la compression telles que lignosulfonates, maltodextrines, amidon.
Peuvent également être ajoutés des oligo-éléments choisis et dosés en fonction des carences que peuvent présenter les sols à traiter.
Peuvent également être additionnées des matières colorantes telles que charbon, charbon de bois, oxyde de fer de façon à conférer au produit un aspect très proche de celui de la terre.
D'autres matières colorantes peuvent être utilisées de façon à conférer au produit des couleurs décoratives comme le rouge, le vert, le bleu ou un mélange de ces trois couleurs.
Cependant, malgré l'ajout de différents additifs, la teneur en matières cellulosiques reste comprise entre 50 et 100%, préférablement entre 75 et 95%.

Les matières cellulosiques entrant dans la composition de la couverture de sol sont hachées grossièrement de façon à obtenir des débris d'une taille comprise entre 0.1 et 20 millimètres.
Ces débris sont mélangés intimement avec les autres éléments constituant la couverture de sol. Ce mélange est ensuite comprimé (moulé, granulé ou extrudé) en fonction de la forme désirée:
il peut s'agir de tuilots, de pellets, de galettes, de poudres ou de bouchons. Leur taille peut osciller de 2 à 50 millimètres, préférablement de 4 à 25 millimètres, encore plus préférablement de 4 à 10 millimètres. En ce qui concerne les poudres, la granulométrie varie de 0.1 à 5 millimètres.

Le produit peut être utilisé comme couverture de sols cultivés ou non cultivés.
Cette couverture de sol est indiquée en jardin décoratif (plates-bandes, parterres, sous-bois, terres rases), en jardin potager (toute culture potagère classique et particulièrement les cultures de fraisiers, de tomates, de melons, de courgettes et de cornichons), en cultures maraîchères ou fruitières, de plein air ou abritées, en pépinière d'arbres et de plantes, en parc d'agrément, en bacs, pots ou jardinières.
Les quantités à utiliser oscillent entre 1 et 10 kg par mètre carré, préférablement de 2 à 8 kg par mètre carré, plus préférablement de 4 à 6 kg par mètre carré.
Son utilisation est simple. Une fois étalé sur le sol et arrosé si l'humidité ambiante n'est pas suffisante, le produit gonfle et recouvre complètement le sol à protéger. Après un jour ou deux, la surface du sol est égalisée. La couverture de sol est prête et perdurera à la surface du sol de 3 à 12 mois selon les conditions atmosphériques.

La présente invention est illustrée par les exemples ci-après.

### Exemple 1.

970 kg de paille de froment sont hachés grossièrement à l'aide d'un moulin à marteaux dont la grille de sortie est munie de trous d'un diamètre de 20 mm. Les débris obtenus sont mélangés intimement à 18 kg de sulfate de fer, 1 kg d'un mélange contenant de l'acide propionique, de l'acide phosphorique, de l'acide sorbique et de l'acide fumarique (en proportions égales) et 10 kg de lignosulfonates dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqué en surface de sols cultivés ou non cultivés.

### Exemple 2.

960 kg de paille de froment sont hachés grossièrement à l'aide d'un moulin à marteaux dont la grille de sortie est munie de trous d'un diamètre de 20 mm. Les débris obtenus sont mélangés intimement à 10 kg d'acide phosphorique concentré, 18 kg de sulfate de fer, 1 kg d'un mélange contenant de l'acide propionique, de l'acide phosphorique, de l'acide sorbique et de l'acide fumarique (en proportions égales) et 10 kg de lignosulfonates dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqué en surface de sols cultivés ou non cultivés présentant un caractère basique.

### Exemple 3.

920 kg de paille de froment sont hachés grossièrement à l'aide d'un moulin à marteaux dont la grille de sortie est munie de trous d'un diamètre de 20 mm. Les débris obtenus sont mélangés intimement à 50 kg d'hydroxyde de potassium, 18 kg de sulfate de fer, 1 kg d'un mélange contenant de l'acide propionique, de l'acide phosphorique, de l'acide sorbique et de l'acide fumarique (en proportions égales) et 10 kg de lignosulfonates dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqué en surface de sols cultivés ou non cultivés présentant un caractère acide.

### Exemple 4.

970 kg de paille de froment sont hachés grossièrement à l'aide d'un moulin à manteaux dont la grille de sortie est munie de trous d'un diamètre de 20 mm. Les débris obtenus sont mélangés intimement à 18 kg de sulfate de fer, 1 kg d'un mélange contenant de l'acide propionique, de l'acide phosphorique, de l'acide sorbique et de l'acide fumarique (en proportions égales), 10 kg de lignosulfonates et 0.1 kg de sulfate de zinc dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqué en surface de sols cultivés ou non cultivés où le manque de zinc constitue un problème.

### Exemple 5.

930 kg de paille de froment sont hachés grossièrement à l'aide d'un moulin à marteaux dont la grille de sortie est munie de trous d'un diamètre de 20 mm. Les débris obtenus sont mélangés intimement à 40 kg de charbon de bois, 18 kg de sulfate de fer, 1 kg d'un mélange contenant de l'acide propionique, de l'acide phosphorique, de l'acide sorbique et de l'acide fumarique (en proportions égales) et 10 kg de lignosulfonates dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqué en surface de sols cultivés ou non cultivés. Ces bouchons, par l'ajout de charbon de bois, confèrent au sol recouvert du produit une meilleure rétention de l'eau et un aspect noir recherché par certaines personnes.

### Exemple 6.

910 kg de paille de froment sont hachés grossièrement à l'aide d'un moulin à marteaux dont la grille de sortie est munie de trous d'un diamètre de 20 mm. Les débris obtenus sont mélangés intimement à 60 kg de déchets de laine, 18 kg de sulfate de fer, 1 kg d'un mélange contenant de l'acide propionique, de l'acide phosphorique, de l'acide sorbique et de l'acide fumarique (en proportions égales) et 10 kg de lignosulfonates dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqué en surface de sols cultivés ou non cultivés. Ces bouchons, par l'ajout de déchets de laine, permettent un relargage progressif d'azote organique au sol et donc une fertilisation de celui-ci.

### Exemple 7.

550 kg de paille de froment et 410 kg de cartons usagés mais propres sont hachés grossièrement à l'aide d'un moulin à manteaux dont la grille de sortie est munie de trous d'un diamètre de 15 mm. Les débris obtenus sont mélangés intimement à 30 kg de sulfate de fer, 1 kg d'un mélange contenant de l'acide propionique, de l'acide phosphorique, de l'acide sorbique et de l'acide fumarique (en proportions égales) et 10 kg de lignosulfonates dans un mélangeur de type NAUTA. Après un temps de contact de 30 à 60 minutes, le mélange est comprimé à l'aide d'une presse à filière horizontale fixe sous forme de bouchons de 4 mm de diamètre et de 10 mm de longueur. Ces bouchons sont refroidis dans un refroidisseur vertical. Les bouchons sont prêts à l'emploi et peuvent être appliqués en surface de sols cultivés ou non cultivés. Cette technique permet le recyclage dans la nature de produits usagés dont la réutilisation n'est pas toujours possible.

## Revendications

1. Couverture de sol compacte à haut pouvoir de gonflement faite à partir de matières cellulosiques. Les matières cellulosiques sont hachées grossièrement de façon à obtenir des débris d'une taille comprise entre 0.1 et 20 mm. Ces débris sont mélangés intimement avec d'autres éléments constituant, le cas échéant, la couverture de sol. Ce mélange est ensuite comprimé sous la forme désirée: il peut s'agir de tuilots, de pellets, de galettes, de poudre ou de bouchons. Leur taille peut osciller entre 2 et 50 mm de diamètre, préférablement de 4 à 25 mm, plus préférablement de 4 à 10 mm. Pour les poudres, la granulométrie varie de 0.1 mm à 5 mm, préférablement de 1 à 3 mm. Cette couverture de sol, comme son nom l'indique, est utilisée pour le recouvrement de sols cultivés ou non cultivés.

2. Couverture de sol telle que décrite dans la revendication 1 où les matières cellulosiques sont des pailles (froment, escourgeon, riz, millet, sorgho, ...).

3. Couverture de sol telle que décrite dans la revendication 1 où les matières cellulosiques sont des balles de céréales.

4. Couverture de sol telle que décrite dans la revendication 1 où les matières cellulosiques sont des paillettes, des anas ou de l'étoupe de lin, des bagasses de canne à sucre, des coques de cacao, des rafles de maïs.

5. Couverture de sol telle que décrite dans la revendication 1 où les matières cellulosiques sont de la sciure de bois, du terreau, du compost ou de la tourbe.

6. Couverture de sol telle que décrite dans la revendication 1 où les matières cellulosiques sont du foin ou des déshydratés de luzerne ou de graminées.

7. Couverture de sol telle que décrite dans la revendication 1 où les matières cellulosiques sont du papier ou du carton.

8. Couverture de sol telle que décrite dans la revendication 1 où les matières cellulosiques sont constituées d'un mélange des différentes matières cellulosiques citées dans les revendications 2. à 7. Ce mélange ne doit pas nécessairement comprendre toutes les sortes de matières cellulosiques citées, il peut s'agir seulement de certaines d'entre elles.

9. Couverture de sol telle que décrite dans la revendication 1. où des éléments autres que des matières cellulosiques sont ajoutés dans une proportion variant de 0 à 50%. Il peut s'agir de matières organiques, de matières désinfectantes, de matières acidifiantes, de matières basifiantes, de matières aidant à la compression, d'oligo-éléments, de matières colorantes. Les matières organiques sont préférablement de la laine ou des déchets de laine, du cuir ou des déchets de cuir, des poils d'animaux, des plumes d'animaux ou du mycélium de champignons, plus préférablement de la laine ou des déchets de laine ou du mycélium de champignon, encore plus préférablement de la laine ou des déchets de laine. Les matières désinfectantes sont préférablement de l'acide propionique, du sulfate de fer, du sulfate de cuivre. Les matières acidifiantes sont préférablement de l'acide phosphorique, de l'acide sulfurique ou de l'acide acétique, plus préférablement de l'acide phosphorique. Les matières basifiantes sont préférablement de l'hydroxyde de sodium, de l'hydroxyde de potassium, de l'hydroxyde de calcium, du carbonate de calcium, plus préférablement de l'hydroxyde de potassium. Les matières aidant à la compression sont preférablement des lignosulfonates, des maltodextrines ou de l'amidon. Les matières colorantes sont préférablement du charbon, du charbon de bois ou de l'oxyde de fer.

10. Couverture de sol telle que décrite dans la revendication 2. où des éléments autres que des matières cellulosiques sont ajoutés dans une proportion variant de 0 à 50%. Il peut s'agir de matières organiques, de matières désinfectantes, de matières acidifiantes, de matières basifiantes, de matières aidant à la compression, d'oligo-éléments, de matières colorantes. Les matières organiques sont préférablement de la laine ou des déchets de laine, du cuir ou des déchets de cuir, des poils d'animaux, des plumes d'animaux ou du mycélium de champignons, plus préférablement de la laine ou des déchets de laine ou du mycélium de champignon, encore plus préférablement de la laine ou des déchets de laine. Les matières désinfectantes sont préférablement de l'acide propionique, du sulfate de fer, du sulfate de cuivre. Les matières acidifiantes sont préférablement de l'acide phosphorique, de l'acide sulfurique ou de l'acide acétique, plus préférablement de l'acide phosphorique. Les matières basifiantes sont préférablement de l'hydroxyde de sodium, de l'hydroxyde de potassium, de l'hydroxyde de calcium, du carbonate de calcium, plus préférablement de l'hydroxyde de potassium. Les matières aidant à la compression sont préférablement des lignosulfonates, des maltodextrines ou de l'amidon. Les matières colorantes sont préférablement du charbon, du charbon de bois ou de l'oxyde de fer.

11. Couverture de sol telle que décrite dans la revendication 1. où des éléments désinfectants sont ajoutés aux matières cellulosiques. Ces éléments sont préférablement de l'acide propionique, de l'acide sorbique, de l'acide fumarique.

12. Couverture de sol telle que décrite dans la revendication 2. où des éléments désinfectants sont ajoutés. Ces éléments sont préférablement de l'acide propionique, de l'acide sorbique, de l'acide fumarique.

13. Utilisation d'une couverture de sol telle que décrite dans la revendication 1. à une concentration oscillant de 1 à 10 kg par mètre carré, préférablement de 2 à 8 kg par mètre carré, encore plus préférablement de 4 à 6 kg par mètre carré.

14. Utilisation d'une couverture de sol telle que décrite dans la revendication 2. à une concentration oscillant de 1 à 10 kg par mètre carré, préférablement de 2 à 8 kg par mètre carré, encore plus préférablement de 4 à 6 kg par mètre carré.

15. Utilisation d'une couverture de sol telle que décrite dans la revendication 1. en jardin potager, en jardin décoratif, en parcs d'agrément, en bacs, pots ou jardinières, en pépinières d'arbres ou de plantes, en cultures fruitières ou maraîchères (de plein air ou couvertes), préférablement en jardin potager, en jardin décoratif, en parc d'agrément, en bacs, pots ou jardinières.
